# EUROPÄISCHE PATENTSCHRIFT

(11) **EP 2 042 020 B1**
(45) Veröffentlichungstag und Bekanntmachung des Hinweises auf die Patenterteilung: **13.04.2011**
(21) Anmeldenummer: 08016745.5
(22) Anmeldetag: 24.09.2008
(51) Int. Cl.: A01D 46/26

(54) **Tragbares, handgeführtes Erntegerät**
Portable, hand-operated harvesting device
Moissonneuse portative manuelle

(30) Priorität: 27.09.2007 DE 102007046111
(43) Veröffentlichungstag der Anmeldung: 01.04.2009
(73) Patentinhaber: Andreas Stihl AG & Co. KG, 71336 Waiblingen (DE)
(72) Erfinder: Machens, Kai-Ulrich, Dr.-Ing., 70193 Stuttgart (DE); Neumann, Philipp, Dipl.-Ing., 70597 Stuttgart (DE); Stein, Marcus, Dr.-Ing., 70794 Filderstadt (DE); Götzel, Arne, Dipl.-Ing., 71522 Backnang (DE); Fees, Heiner, Dipl.-Ing., 74321 Bietigheim-Bissingen (DE)
(74) Vertreter: Wasmuth, Rolf

(56) Entgegenhaltungen:
- EP-A- 1 417 878
- EP-A- 1 627 561
- US-A- 4 982 558
- US-B1- 7 121 074

## Beschreibung

Die Erfindung betrifft ein tragbares, handgeführtes Erntegerät der im Oberbegriff des Anspruchs 1 angegebenen Gattung.

Aus der WO 2004/095908 A1 ist ein Erntegerät bekannt, dessen Rüttelstange hin- und hergehend über einen Kurbeltrieb angetrieben ist. Zur Verminderung der im Betrieb auf den Bediener einwirkenden Kräfte ist ein Massenausgleich vorgesehen, der den durch die hin- und hergehende Bewegung der Rüttelstange erzeugten Massekräften entgegenwirkt. Der Massenausgleich ist als gegenläufig zur Rüttelstange angetriebenes Rohr ausgebildet, das die Rüttelstange umgibt. Die Rüttelstange ist in dem Rohr gelagert. Aufgrund der gegenläufigen Bewegung entstehen im Betrieb hohe Relativgeschwindigkeiten, die zu einer erhöhten Reibung und damit zu hohem Verschleiß führen. Bei der WO 2004/095908 A1 ist der Kurbeltrieb zusammen mit dem Massenausgleichsrohr und einem Getriebe zum Antrieb des Kurbeltriebs in einem gemeinsamen, ölgefüllten Gehäuse gelagert. In dem Ölbad kann sich Abrieb sammeln, der zu erhöhtem Verschleiß führt. Aufgrund des großen Volumens wird eine große Ölmenge benötigt, die das Gewicht des Erntegeräts erhöht.

Aus der US 4,982,558 ist ein fahrbares Erntegerät bekannt, das zum Massenausgleich gegenläufig rotierende Ausgleichsmassen besitzt. Die Ausgleichsmassen sind auf separaten Wellen angeordnet, die an die Bewegung des Rüttelmechanismus gekoppelt sind. Aufgrund der Vielzahl der angetriebenen Wellen ist diese Einrichtung schwer und benötigt einen großen Bauraum.

Der Erfindung liegt die Aufgabe zugrunde, ein tragbares, handgeführtes Erntegerät der gattungsgemäßen Art zu schaffen, das ein geringes Gewicht und eine hohe Lebensdauer aufweist.

Diese Aufgabe wird durch ein tragbares, handgeführtes Erntegerät mit den Merkmalen des Anspruchs 1 gelöst.

Um einen geringen Verschleiß und eine hohe Lebensdauer des Erntegeräts zu erreichen, ist ein Ausgleichsmechanismus vorgesehen, der zwei gegenläufig angetriebene Ausgleichsmassen aufweist. Eine erste Ausgleichsmasse ist dabei mit der Kurbelwelle des Kurbeltriebs verbunden, der die Rüttelstange antreibt. Demnach dient die Kurbelwelle sowohl als Antriebswelle für den Kurbeltrieb als auch als Lagerwelle für eine der Ausgleichsmassen. Eine zusätzliche Lagerwelle für die Ausgleichsmasse kann entfallen, so dass sich ein geringes Gewicht des Ausgleichsmechanismus ergibt. Dadurch, dass keine dritte Welle in den Bauraum integriert werden muss, können die Ausgleichsgewichte mit vergleichsweise großem Radius ausgeführt werden. Zum Ausgleich der auftretenden Massenkräfte können dadurch Ausgleichsmassen mit vergleichsweise geringem Gewicht eingesetzt werden. Um auftretende Querkräfte gering zu halten, ist vorgesehen, dass die Drehachse der Kurbelwelle, die gleichzeitig die Drehachse der ersten Ausgleichsmasse darstellt, einen Abstand zur Längsmittelachse der Rüttelstange aufweist.

Vorteilhaft dreht eine zweite Ausgleichsmasse um eine zweite Drehachse, wobei die erste und die zweite Drehachse auf gegenüberliegenden Seiten der Längsmittelachse der Rüttelstange angeordnet sind. Dadurch können sich die auftretenden Momente um eine Achse, die parallel zur Achse der Kurbelwelle verläuft, mindestens teilweise ausgleichen. Vorteilhaft weisen die erste und die zweite Drehachse etwa den gleichen Abstand zur Längsmittelachse der Rüttelstange auf. Dadurch wird ein vollständiger Ausgleich auftretender Momente um eine parallel zur Drehachse der Kurbelwelle liegende Achse ermöglicht.

Vorteilhaft umfasst der Kurbeltrieb ein Pleuel, das an einer ersten Schwenkachse schwenkbar an der Kurbelwelle gelagert ist, wobei die Schwenkachse des Pleuels bezogen auf die Drehachse der Kurbelwelle gegenüberliegend zum Massenschwerpunkt der ersten Ausgleichsmasse angeordnet ist. In Richtung der Längsmittelachse der Rüttelstange führen die Ausgleichsmassen und die Rüttelstange dadurch eine gegenläufige Bewegung durch. Die Massenkräfte der Ausgleichsmassen, die durch den senkrecht zur Rüttelstange verlaufenden Bewegungsanteil der Ausgleichsmassen hervorgerufen werden, gleichen sich aufgrund der gegenläufigen Bewegung der beiden Ausgleichsmassen vorteilhaft aus.

Eine einfache Gestaltung ergibt sich, wenn die Bewegung der Ausgleichsmassen über zwei miteinander kämmende Stirnräder gekoppelt ist, wobei ein erstes Stirnrad drehfest mit der Kurbelwelle verbunden ist und ein zweites Stirnrad drehfest mit der zweiten Ausgleichsmasse verbunden ist. Dadurch ergibt sich ein einfacher, kompakter Aufbau mit geringem Gewicht. Vorteilhaft treibt der Antriebsmotor die Kurbelwelle über ein Getriebe an. Das Getriebe umfasst dabei insbesondere ein an einer Antriebswelle festgelegtes Antriebsritzel, das ein Kegelrad antreibt. Das Kegelrad erlaubt eine Ausrichtung der Antriebswelle parallel zur Rüttelstange, die eine vorteilhafte, platzsparende Anordnung des Antriebsmotors ermöglicht. Das Kegelrad ist vorteilhaft drehfest mit einem Antriebsrad verbunden, das ein mit einer Ausgleichsmasse verbundenes Stirnrad antreibt. Durch das zwischengeschaltete Antriebsrad wird eine geeignete Übersetzung der Drehzahl des Antriebsmotors, der vorteilhaft ein Verbrennungsmotor ist, erreicht. Die Zähnezahl des Antriebsrads ist dabei vorteilhaft erheblich geringer als die des Stirnrads. Zweckmäßig treibt das Antriebsrad das erste, mit der Kurbelwelle verbundene Stirnrad an. Dadurch ergibt sich eine direkte Übertragung der einzuleitenden Kräfte von der Antriebswelle zur Kurbelwelle. Über das zweite Stirnrad werden lediglich die zum Antrieb der zweiten Ausgleichsmasse benötigten Kräfte übertragen. Da über das zweite Stirnrad nur geringe Kräfte übertragen werden müssen, kann auch die Lagerung des zweiten Stirnrads kleiner dimensioniert werden, so dass sich ein geringes Gewicht und ein kleiner Bauraum des Erntegeräts ergeben.

Um das Schmiervolumen möglichst gering zu halten, ist vorgesehen, dass das Getriebe mit dem ersten und dem zweiten Stirnrad in einem mit Schmiermittel gefüllten Getriebegehäuse angeordnet ist, und dass die Ausgleichsmassen außerhalb des Getriebegehäuses angeordnet sind. Das Volumen des Getriebegehäuses kann dadurch gering gehalten werden, so dass nur eine geringe Menge von Schmiermittel benötigt wird. Die Ausgleichsmassen können sich in Luft bewegen, so dass sich ein geringer Bewegungswiderstand ergibt.

Vorteilhaft umfasst der Kurbeltrieb ein Pleuel, das an einer Schwenkachse schwenkbar mit der Rüttelstange verbunden ist, wobei die Schwenkachse einen Abstand zur Längsmittelachse der Rüttelstange aufweist. Durch den Abstand der Schwenkachse zur Längsmittelachse der Rüttelstange lassen sich die über das Pleuel eingeleiteten Querkräfte gering halten. Die Querkräfte sind aufgrund des Abstands der Drehachse der Kurbelwelle zur Längsmittelachse der Rüttelstange gegeben. Der Kurbeltrieb ist als geschränkter Kurbeltrieb ausgeführt. Vorteilhaft ist der Abstand der Schwenkachse zur Längsmittelachse der Rüttelstange kleiner als der Abstand der Drehachse der Kurbelwelle zur Längsmittelachse der Rüttelstange. Der Abstand der Schwenkachse zur Längsmittelachse der Rüttelstange beträgt vorteilhaft etwa 20% bis etwa 90% des Abstands der Drehachse der Kurbelwelle zur Längsmittelachse der Rüttelstange. Insbesondere beträgt der Abstand der Schwenkachse etwa 60% bis etwa 80%, vorzugsweise etwa 80% des Abstands der Drehachse der Kurbelwelle zur Längsmittelachse der Rüttelstange.

Vorteilhaft ist das Pleuel über ein Anschlussstück mit der Rüttelstange verbunden, wobei die Rüttelstange an dem Anschlussstück um ihre Längsmittelachse drehbar gehalten ist. Dadurch kann ein an der Rüttelstange angeordneter Haken im Betrieb einfach durch Drehen der Rüttelstange ausgerichtet werden.

Vorteilhaft ist die Rüttelstange mit einem in Richtung der Längsmittelachse der Rüttelstange vorgespannten Lager an dem Anschlussstück gelagert. Das Lager ist dabei insbesondere als Nadellager ausgebildet. Durch die Vorspannung des Lagers in Richtung der Längsmittelachse ist sichergestellt, dass zwischen der Rüttelstange und dem Anschlussstück kein Spiel besteht. Dadurch wird eine hohe Lebensdauer des Kurbeltriebs erreicht. Zur Erhöhung der Lebensdauer des Kurbeltriebs ist insbesondere vorgesehen, dass im Bereich der Schwenkachse mindestens eine Führung für den Kurbeltrieb vorgesehen ist. Vorteilhaft sind beidseitig des Kurbeltriebs gehäusefeste Führungen vorgesehen. Dadurch kann ein seitliches Ausweichen des Kurbeltriebs in diesem Bereich verhindert werden.

Um einen geringen Bauraum des Erntegeräts zu erreichen, ist vorgesehen, dass eine erste, mit dem Pleuel verbundene Ausgleichsmasse zwei Ausgleichsgewichte umfasst, die beidseitig des Pleuels angeordnet sind, und dass eine zweite Ausgleichsmasse ein Ausgleichsgewicht umfasst, das in Richtung der Drehachse dieses Ausgleichsgewichts zwischen den beiden Ausgleichsgewichten der ersten Ausgleichsmasse angeordnet ist. Vorteilhaft beträgt der Abstand der Drehachsen der Ausgleichsmassen weniger als etwa 120% der größten radialen Erstreckung eines Ausgleichsgewichts. Die Ausgleichsgewichte greifen demnach ineinander. Dadurch können die Drehachsen nah beieinander angeordnet werden. Der benötigte Bauraum kann dadurch verringert werden.

Vorteilhaft treibt der Antriebsmotor eine Antriebswelle an, wobei die Schwenkachse des Pleuels an dem Anschlussstück zur Drehachse der Antriebswelle einen Abstand aufweist, der kleiner oder gleich dem Abstand der Schwenkachse des Pleuels zur Längsmittelachse der Rüttelstange ist. Die Drehachse der Antriebswelle kann dabei auf der der Längsmittelachse der Rüttelstange zugewandten Seite oder auf der der Längsmittelachse abgewandten Seite der Schwenkachse des Pleuels angeordnet sein. Vorteilhaft schneidet die Drehachse der Antriebswelle die Schwenkachse des Pleuels.

Eine einfache, gute Lagerung der Rüttelstange wird erreicht, wenn die Rüttelstange an ihrem motorseitigen Ende von einem Schutzrohr umgeben ist, wobei die Rüttelstange in dem Schutzrohr mit mindestens einem Gleitlager gelagert ist. Um eine hohe Lebensdauer des Erntegeräts zu erreichen und Verschleiß zu minimieren, sind vorteilhaft mindestens zwei Gleitlager zur Lagerung der Rüttelstange vorgesehen, wobei die Gleitlager in einem Zwischenraum zwischen dem Schutzrohr und der Rüttelstange angeordnet sind. Der Zwischenraum ist vorteilhaft in Längsrichtung der Rüttelstange von außerhalb der Lager angeordneten Dichtungen begrenzt und mit Schmiermittel gefüllt. Dadurch wird eine gute Schmierung der Lagerung der Rüttelstange erreicht, so dass sich eine hohe Lebensdauer und ein geringer Verschleiß ergeben.

Ein Ausführungsbeispiel der Erfindung wird im Folgenden anhand der Zeichnung erläutert. Es zeigen:
- Fig. 1: eine schematische Darstellung eines Erntegeräts,
- Fig. 2: eine perspektivische Darstellung des Getriebes des Erntegeräts,
- Fig. 3: das Getriebe und den Kurbeltrieb des Erntegeräts in perspektivischer Darstellung,
- Fig. 4: eine Seitenansicht des Getriebes und des Kurbeltriebs,
- Fig. 5: eine Seitenansicht in Richtung des Pfeils V in Fig. 4,
- Fig. 6: eine Seitenansicht in Richtung des Pfeils VI in Fig. 5,
- Fig. 7: eine Seitenansicht in Richtung des Pfeils VII in Fig. 6 mit schematisch angedeutetem Getriebegehäuse,
- Fig. 8: eine Seitenansicht von Getriebe, Kurbeltrieb und Rüttelstange,
- Fig. 9: eine perspektivische Darstellung des Kurbeltriebs,
- Fig. 10: eine perspektivische Darstellung der Lagerung der Rüttelstange,
- Fig. 11 bis Fig. 14: schematische Darstellungen des Ausgleichsmechanismus in unterschiedlichen Stellungen der Ausgleichsmassen,
- Fig. 15: eine perspektivische Darstellung eines Ausführungsbeispiels von Getriebe und Kurbeltrieb,
- Fig. 16: eine Seitenansicht auf das Anschlussstück des Kurbeltriebs aus Fig. 15,
- Fig. 17: eine Seitenansicht in Richtung des Pfeils XVII in Fig. 16,
- Fig. 18: eine Seitenansicht in Richtung des Pfeils XVIII in Fig. 17,
- Fig. 19: eine Seitenansicht in Richtung des Pfeils XIX in Fig. 18,
- Fig. 20: einen Schnitt entlang der Linie XX-XX in Fig. 19,
- Fig. 21: einen Schnitt entlang der Linie XXI-XXI in Fig. 20.

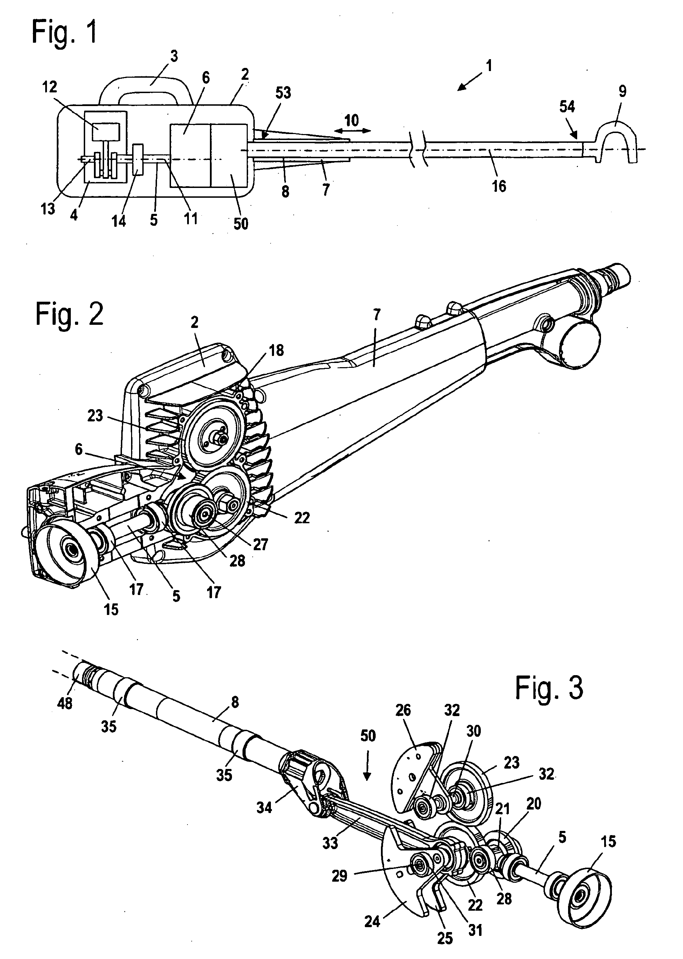

Das in Fig. 1 gezeigte Erntegerät 1 besitzt ein Gehäuse 2, an dem ein Griff 3 zum Führen des Erntegeräts angeordnet ist. Zusätzlich kann das Erntegerät 1 weitere Griffe und/oder einen Traggurt umfassen, mit dem der Bediener das Erntegerät 1 über der Schulter tragen kann. Das Erntegerät 1 kann beispielsweise ein Olivenschüttler, Kaffeeernter oder dgl. sein. In dem Gehäuse 2 ist ein Antriebsmotor 4 angeordnet, der im Ausführungsbeispiel als Verbrennungsmotor, insbesondere als Zweitaktmotor oder als gemischgeschmierter Viertaktmotor ausgebildet ist und der einen Kolben 12 umfasst, der eine Motorwelle 13 rotierend antreibt. Die Motorwelle 13 ist über eine Kupplung 14, insbesondere eine Fliehkraftkupplung, mit einer Antriebswelle 5 verbunden, die um eine Drehachse 11 rotierend angetrieben ist. Die Antriebswelle 5 ist die Eingangswelle eines Getriebes 6. Das Getriebe 6 treibt über einen Kurbeltrieb 50 eine Rüttelstange 8 an. Die Rüttelstange 8 ist in Richtung ihrer Längsmittelachse 16 hin- und hergehend angetrieben, wie durch den Pfeil 10 in Fig. 1 angedeutet ist. Die Rüttelstange 8 ist mit ihrem motorseitigen Ende 53 mit dem Kurbeltrieb 50 verbunden. Benachbart zu diesem Ende ist die Rüttelstange 8 in einem am Gehäuse 2 angeordneten Schutzrohr 7 gelagert. Das Schutzrohr 7 kann in das Gehäuse 2 integriert sein. Am gegenüberliegenden, dem Gehäuse 2 entfernt liegenden Ende 54 ist die Rüttelstange 8 mit einem Haken 9 verbunden, der zum Greifen von Ästen eines abzuerntenden Baums dient.

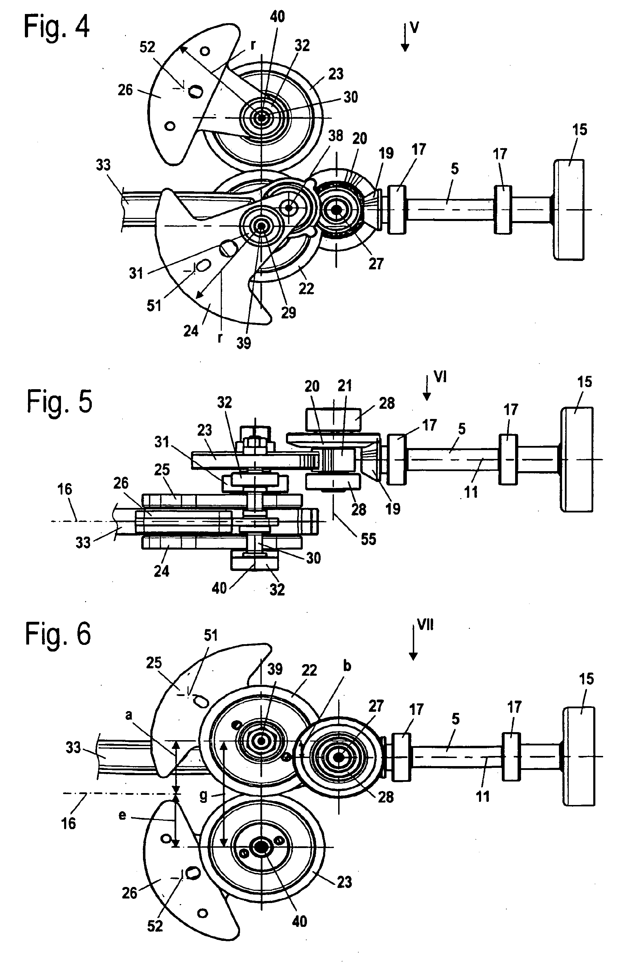

Fig. 2 zeigt das Getriebe 6 in perspektivischer Darstellung. Das Getriebe 6 ist in einem Getriebegehäuse 18 angeordnet, das ins Gehäuse 2 integriert ist. Wie Fig. 2 zeigt, ist auch das Schutzrohr 7 am Gehäuse 2 integriert. Die Kupplung 14 weist eine Kupplungstrommel 15 auf, die mit der Antriebswelle 5 drehfest verbunden ist. Die Antriebswelle 5 ist mit zwei Lagern 17, die vorteilhaft als lebensdauergeschmierte Wälzlager ausgebildet sind, im Gehäuse 2 um eine Drehachse 11 drehbar gelagert. Die Antriebswelle 5 besitzt das in den Figuren 4 und 5 gezeigte Antriebsritzel 19, das in das Getriebegehäuse 18 einragt. Das dem Getriebegehäuse 18 benachbarte Lager 17 ist als dichtendes Lager ausgeführt.

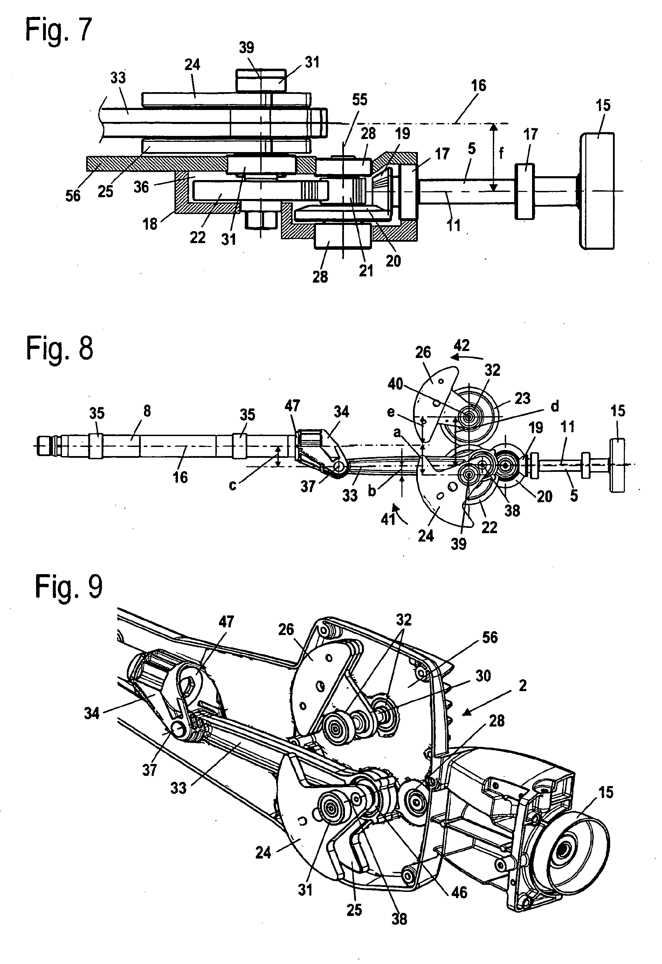

In den Figuren 3 bis 7 ist das Getriebe 6 im Einzelnen gezeigt. Das Antriebsritzel 19 treibt ein Kegelrad 20 an, dessen Drehachse 55 senkrecht zur Drehachse 11 der Antriebswelle 5 angeordnet ist. Das Kegelrad 20 ist auf einer Welle 27 (Fig. 4) angeordnet, die mit zwei Wälzlagern 28 (Fig. 7) im Getriebegehäuse 18 gelagert ist. Auf der Welle 27 ist ein Antriebsrad 21 angeordnet, das drehfest mit dem Kegelrad 20 verbunden ist und das ein erstes Stirnrad 22 antreibt. Das erste Stirnrad 22 ist drehfest mit einer Kurbelwelle 29 des Kurbeltriebs 50 verbunden und um eine Drehachse 39 drehbar gelagert. Das erste Stirnrad 22 kämmt mit einem zweiten Stirnrad 23, das mit einer Welle 30 um eine Drehachse 40 drehbar gelagert ist. Die beiden Stirnräder 22 und 23 drehen damit gegensinnig. Die Verzahnungen der Stirnräder 22 und 23, des Antriebsrads 21, des Kegelrads 20 und des Antriebsritzels 90 sind in den Figuren nur schematisch durch einige Linien angedeutet.

Wie Fig. 7 zeigt, ist die Kurbelwelle 29 mit Lagern 31, die als Wälzlager ausgebildet sind, drehbar gelagert. Wie Fig. 7 auch zeigt, besitzt das Getriebegehäuse 18 einen Schmierraum 36, in dem das Antriebsritzel 19, das Kegelrad 20, das Antriebsrad 21 sowie die beiden Stirnräder 22 und 23 laufen. Der Schmierraum 36 ist mit Schmiermittel, vorteilhaft mit Fett gefüllt. Das Volumen des Schmierraums 36 ist klein gehalten. Die in der Zwischenwand 56 des Getriebegehäuses 16 angeordneten Lager 28, 31 und 32 (Figuren 4 und 5) sind dichtend ausgebildet. Mit den Lagern 32, die vorteilhaft ebenfalls als Wälzlager ausgebildet sind, ist die Welle 30 des zweiten Stirnrads 23 drehbar gelagert.

Zum Massenausgleich der durch die hin- und hergehend angetriebene Rüttelstange 8 erzeugten Massenkräfte sind zwei Ausgleichsmassen vorgesehen, die mit den Stirnrädern 22 und 23 gegenläufig zueinander rotieren. Eine erste, mit dem ersten Stirnrad 22 drehfest verbundene Ausgleichsmasse umfasst zwei Ausgleichsgewichte 24 und 25 (Fig. 3). Die zweite Ausgleichsmasse umfasst ein drittes Ausgleichsgewicht 26, das drehfest mit der Welle 30 verbunden ist.

Wie die Figuren 3 und 5 zeigen, ist das dritte Ausgleichsgewicht 26 in Richtung der Drehachse 40 gesehen zwischen den Ausgleichsgewichten 24 und 25 angeordnet, so dass das dritte Ausgleichsgewicht 26 zwischen die Ausgleichsgewichte 24 und 25 eingreifen kann. Wie Fig. 6 zeigt, besitzen die Drehachsen 39 und 40 einen senkrecht zu den Drehachsen 39 und 40 gemessenen Abstand g, der kleiner als die Summe der in Fig. 4 gezeigten größten radialen Erstreckungen r der Ausgleichsgewichte 24, 25, 26 ist. Die größte radiale Erstreckung r gibt dabei den maximalen Abstand eines Punkts der Ausgleichsgewichte 24, 25, 26 zu den zugehörigen Drehachsen 39 bzw. 40 an. Der Abstand g beträgt vorteilhaft bis zu etwa 120% der größten radialen Erstreckung r.

Wie die Figuren 3 und 4 zeigen, umfasst der Kurbeltrieb 50 ein Pleuel 33, das an einer ersten Schwenkachse 38 schwenkbar mit den Ausgleichsgewichten 24 und 25 verbunden ist. Wie Fig. 4 zeigt, ist die erste Schwenkachse 38 bezogen auf die Drehachse 39 gegenüberliegend zu einem Massenschwerpunkt 51 der Ausgleichsgewichte 24 und 25 angeordnet. Die beiden Stirnräder 22 und 23 sind so miteinander gekoppelt, dass der Massenschwerpunkt 51 der Ausgleichsgewichte 24 und 25 in jeder Stellung der Ausgleichsgewichte 24 und 25 auf der gleichen Höhe der Längsmittelachse 16 der Rüttelstange 8 liegt wie ein Massenschwerpunkt 52 des Ausgleichsgewichts 26.

Wie Fig. 9 zeigt, sind die Ausgleichsgewichte 24, 25 und 26 in einem separaten Raum des Gehäuses 2 angeordnet, der mit dem Schmierraum 36 über dichtende Lager 31, 32 und 28 verbunden ist. Die Lager 31, 32 und 28 sind in der Zwischenwand 56 angeordnet, die das Getriebegehäuse 18 von dem Raum, in dem die Ausgleichsgewichte 24, 25 und 26 angeordnet sind, trennt. Über die Lager 31, 32 und 28 kann eine Entlüftung des Schmierraums 36 stattfinden.

Wie die Figuren 3, 8 und 9 zeigen, ist das Pleuel 33 an seinem der ersten Schwenkachse 38 gegenüberliegenden Ende an einer Schwenkachse 37 mit der Rüttelstange 8 verbunden, und zwar über ein Anschlussstück 34. Wie Fig. 8 zeigt, schneidet die Schwenkachse 37 die Drehachse 11 der Antriebswelle 5. Die Schwenkachse 37 kann zur Drehachse 11 der Antriebswelle 5 jedoch auch einen Abstand aufweisen. Die Schwenkachse 37 besitzt zur Längsmittelachse 16 der Rüttelstange 8 einen Abstand c. Auch die Drehachse 11 der Antriebswelle 5 besitzt damit senkrecht zur Schwenkachse 37 gemessen den Abstand c. Der Abstand der Schwenkachse 37 zur Drehachse 11 der Antriebswelle 5 entspricht vorteilhaft höchstens dem Abstand c. Wie Fig. 8 zeigt, sind die Drehachsen 39 und 40 der Ausgleichsgewichte 24, 25 und 26 beidseitig der Längsmittelachse 16 der Rüttelstange 8 angeordnet. Die Drehachse 39 der Kurbelwelle 29 und des ersten Stirnrads 22 besitzt zur Längsmittelachse 16 einen Abstand a, und die Drehachse 40 des dritten Ausgleichsgewichts 26 und des zweiten Stirnrads 22 besitzt zur Längsmittelachse 16 der Rüttelstange 8 einen Abstand e. Vorteilhaft sind die Abstände a und e etwa gleich, so dass die Längsmittelachse 16 mittig zwischen den Drehachsen 39 und 40 angeordnet ist. Dadurch gleichen sich die senkrecht zur Längsmittelachse 16 ausgeübten Massenkräfte der Ausgleichsgewichte 24, 25 und 26 bezogen auf die Längsmittelachse 16 aus. Aufgrund des Abstands a der Drehachse 39 der Kurbelwelle 29 zur Längsmittelachse 16 der Rüttelstange 8 ist der Kurbeltrieb 50 als geschränkter Kurbeltrieb ausgebildet. Der Abstand c der Schwenkachse 37 zur Längsmittelachse 16 der Rüttelstange 8 beträgt vorteilhaft etwa 20% bis etwa 90% des Abstands a der Drehachse 39 der Kurbelwelle 29 zur Längsmittelachse 16 der Rüttelstange 8. Insbesondere beträgt der Abstand c etwa 60% bis etwa 80% des Abstands a. Als besonders vorteilhaft wird ein Wert von etwa 80% angesehen. Im Ausführungsbeispiel beträgt der Abstand c etwa 70% des Abstands a.

Wie Fig. 8 auch zeigt, besitzt die Drehachse 39 der Kurbelwelle 29 zur Drehachse 11 der Antriebswelle 5 und zur Schwenkachse 37 einen Abstand b, der vorteilhaft etwa dem Abstand c der Schwenkachse 37 zur Längsmittelachse 16 entspricht oder etwas kleiner als dieser ist. Die Drehachse 40 des zweiten Stirnrads 23 besitzt zur Antriebswelle 11 einen Abstand d, der größer als die Abstände b und e ist. Wie Fig. 8 auch zeigt, rotieren die Ausgleichsgewichte 24 und 25 in einer Drehrichtung 41, die gegenläufig zu einer Drehrichtung 42 des dritten Ausgleichsgewichts 26 verläuft.

Wie Fig. 7 zeigt, ist die Drehachse 11 der Antriebswelle 5 auch seitlich gegenüber der Längsmittelachse 16 der Rüttelstange 8 versetzt. Die Drehachse 11 der Antriebswelle 5 besitzt in Richtung der Drehachse 39 der Kurbelwelle 29 gemessen einen Abstand f.

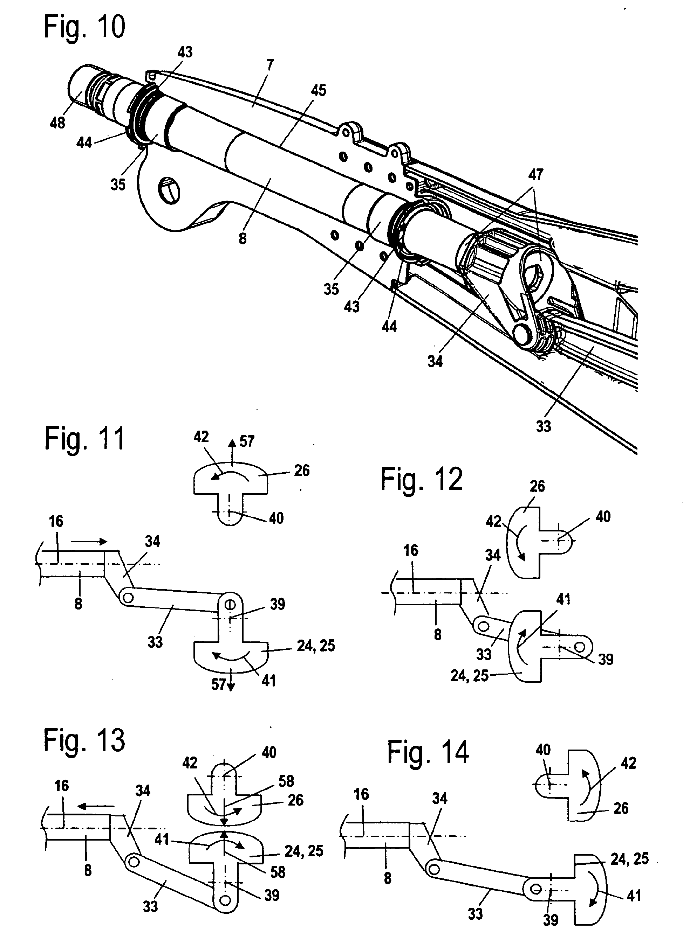

Der Raum, in dem die Ausgleichsgewichte 24, 25 und 26 und das Pleuel 33 angeordnet sind, ist luftgefüllt. Wie die Figuren 8 und 10 zeigen, ist die Rüttelstange 8 mit zwei Gleitlagern 35 versehen, mit denen die Rüttelstange 8 im Schutzrohr 7 gelagert ist. An der jeweils außenliegenden Seite der Gleitlager 35 ist jeweils eine Dichtung 43 angeordnet, die mit einem Sicherungsring 44 gesichert ist. Zwischen der Rüttelstange 8 und dem Schutzrohr 7 ist dadurch ein abgeschlossener Zwischenraum 45 gebildet, der mit Schmiermittel, vorzugsweise mit Schmierfett gefüllt ist. Das Schutzrohr 7 dient als Führungsrohr für die Rüttelstange 8.

Die Rüttelstange 8 ist am Anschlussstück 34 um die Längsmittelachse 16 drehbar gelagert. Hierzu ist die in Fig. 10 gezeigte Lagerhülse 47 vorgesehen. Wie Fig. 9 zeigt, ist das Pleuel 33 an der Kurbelwelle 29 mit einem Lager 46 gelagert, das vorteilhaft ebenfalls als Wälzlager ausgeführt ist. Die Rüttelstange 8 ist mehrteilig ausgebildet. Zur Verbindung des im Schutzrohr 7 geführten Abschnitts der Rüttelstange 8 mit dem aus dem Schutzrohr 7 ragenden Abschnitt der Rüttelstange 8 ist der in den Figuren 3 und 10 gezeigte Anschlusszapfen 48 vorgesehen.

In den Figuren 11 bis 14 ist schematisch die Funktion der Ausgleichsgewichte 24, 25 und 26 gezeigt. Bei der in Fig.11 gezeigten Stellung bewegt sich die Rüttelstange 8 in Richtung auf die Ausgleichsgewichte 24, 25 und 26 und die Ausgleichsmassen rotieren in den Drehrichtungen 41 und 42, wobei die Ausgleichsgewichte 24, 25 und 26 in der in Fig. 11 gezeigten Stellung eine Bewegung auf die Rüttelstange 8 zu ausführen. Die von den Ausgleichsgewichten 24, 25 und 26 ausgeübten Kräfte in Richtung der Längsmittelachse 16 der Rüttelstange 8 gleichen die Massenkräfte der Rüttelstange 8 aus. Die nach außen wirkenden Trägheitskräfte der Ausgleichsgewichte 24, 25 und 26, die durch die Pfeile 57 angedeutet sind, gleichen sich aus, da das Massenträgheitsmoment der Ausgleichsgewichte 24 und 25 dem Massenträgheitsmoment des Ausgleichsgewichts 26 jeweils um die zugehörigen Drehachsen 39 und 40 entspricht.

Bei der in Fig. 12 gezeigten Stellung befindet sich die Rüttelstange 8 im Umkehrpunkt. Auch die Ausgleichsgewichte 24, 25 und 26 führen keine Bewegung in Richtung der Längsmittelachse 16 aus, sondern nur eine Bewegung senkrecht hierzu. In der in Fig. 13 gezeigten Stellung führt die Rüttelstange 8 eine Bewegung von den Ausgleichsgewichten 24, 25 und 26 weg aus. Die Ausgleichsgewichte 24, 25 und 26 bewegen sich in Gegenrichtung von der Rüttelstange 8 weg. Die Trägheitskräfte der Ausgleichsgewichte 24, 25 und 26 senkrecht zur Längsmittelachse 16, die durch die Pfeile 58 angedeutet sind, gleichen sich aus. Bei der in Fig. 14 gezeigten Stellung befindet sich die Rüttelstange 8 im vorderen Umkehrpunkt. Auch die Ausgleichsgewichte 24, 25 und 26 bewegen sich in dieser Stellung nicht in Richtung der Längsmittelachse 16, sondern senkrecht hierzu auseinander.

Aufgrund der gegenläufigen Bewegung der Ausgleichsgewichte 24, 25 und 26 zur Rüttelstange 8 wird in erster Ordnung ein vollständiger Massenausgleich erreicht. Die Massenkräfte zweiter Ordnung werden deutlich reduziert. Dadurch können die Vibrationen, die im Betrieb auf den Benutzer wirken, erheblich verringert werden, so dass ein ergonomisches Arbeiten ermöglicht wird.

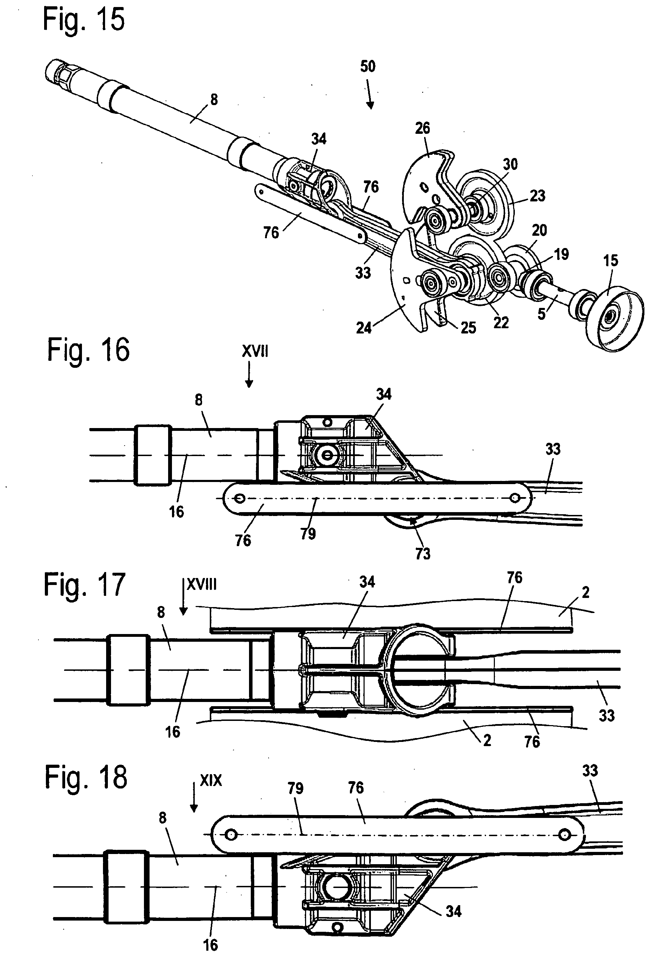

Die Figuren 15 bis 21 zeigen ein Ausführungsbeispiel der Gestaltung des Kurbeltriebs 50 im Verbindungsbereich zwischen dem Pleuel 33 und der Rüttelstange 8. Der Kurbeltrieb 50 aus den Figuren 15 bis 21 entspricht bis auf die im Folgenden näher beschriebenen Unterschiede dem Kurbeltrieb 50 aus den Figuren 1 bis 14. Gleiche Bezugszeichen kennzeichnen einander entsprechende Bauelemente.

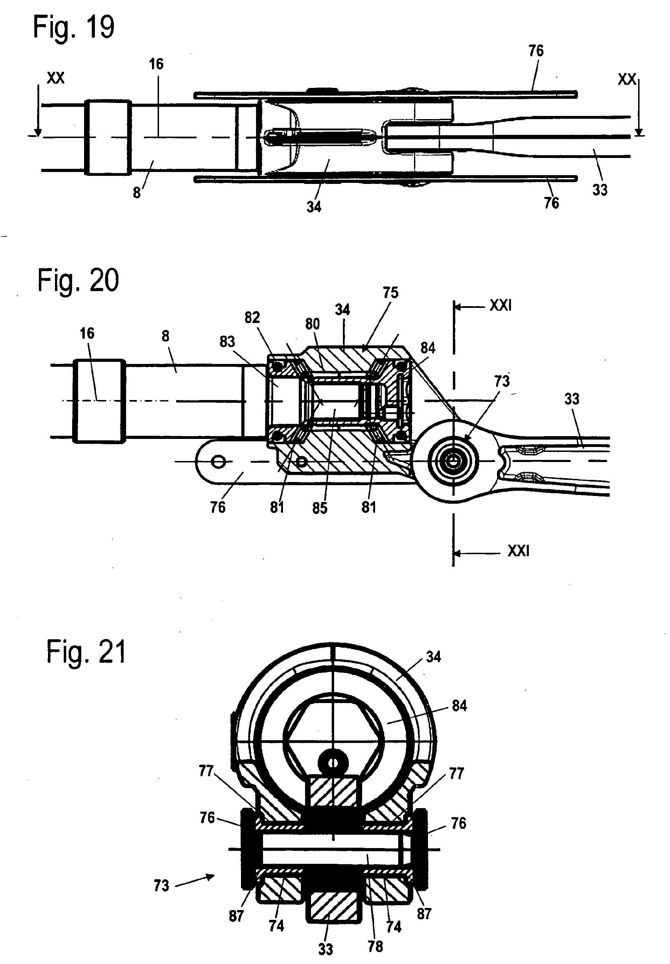

Wie die Figuren 15 bis 21 zeigen, sind im Bereich des Lagers 73 des Pleuels 33 am Anschlussstück 34 beidseitig des Kurbeltriebs 50 Führungsleisten 76 vorgesehen. Wie Fig. 16 zeigt, erstrecken sich die Längsachsen 79 der Führungsleisten 76 etwa parallel zur Längsmittelachse 16 der Rüttelstange 8 und auf der Höhe des Lagers 73, mit dem das Pleuel 33 an dem Anschlussstück 34 schwenkbar gelagert ist. Wie in Fig. 17 schematisch angedeutet ist, sind die beiden Führungsleisten 76 gehäusefest am Gehäuse 2 angeordnet, so dass sich der Kurbeltrieb 50 im Betrieb relativ zu den Führungsleisten 76 bewegt und das Lager 73 an den Führungsleisten 76 abgleitet. Dies ist in Fig. 21 im Einzelnen gezeigt. Das Lager 73 ist durch zwei Aufnahmen 74 am Anschlussstück 34 gebildet, die ein Lagerbolzen 78 durchragt. Zwischen den beiden Abschnitten des Anschlussstücks 34, die die Aufnahmen 74 besitzen, ist das Pleuel 33 angeordnet, das ebenfalls vom Lagerbolzen 78 durchragt ist. In jeder Aufnahme 74 ist eine Buchse 77 angeordnet, die einen nach außen ragenden Bund 87 aufweist. Die Buchsen 77 sind vorteilhaft als Sinterbuchsen ausgebildet, so dass sich geringe Reibkräfte beim Schwenken des Pleuels 33 gegenüber dem Anschlussstück 34 ergeben. Der nach außen ragende Bund 87 jeder Buchse 77 liegt jeweils an einer Führungsleiste 76 an und gleitet im Betrieb reibungsarm auf dieser ab.

Um sicherzustellen, dass kein Spiel zwischen der Rüttelstange 8 und dem Anschlussstück 34 in Richtung der Längsmittelachse 16 der Rüttelstange 8 besteht, ist vorgesehen, dass die Rüttelstange 8 mit einem vorgespannten Lager im Anschlussstück 34 gelagert ist. Das Lager ist als Nadellager 75 ausgebildet und in Fig. 20 im Einzelnen gezeigt. Das Anschlussstück 34 besitzt eine Aufnahme 80 für das Nadellager 75. In die Aufnahme 80 ragt ein Absatz 83 der Rüttelstange 8, an dessen Außenumfang ein Lagerring 82 des Nadellagers 75 angeordnet ist. Die in die Aufnahme 75 ragende Stirnfläche des Lagerrings 82 ist konisch ausgebildet und bildet eine Lauffläche für die Wälzkörper 81 des Nadellagers 75, die als Nadeln ausgebildet sind. Die gegenüberliegende Lauffläche wird durch einen konischen Absatz des Anschlussstücks 34 gebildet.

An den Absatz 83 der Rüttelstange 8 schließt sich ein Gewindezapfen 85 an, auf den ein Spannring 84 des Nadellagers 75 aufgeschraubt ist. Der Spannring 84 ragt von der dem Lagerring 82 gegenüberliegenden Seite in die Aufnahme 80. Auch der Spannring 84 besitzt eine konische Stirnfläche, an der als Nadeln ausgebildete Wälzkörper 81 anliegen. Die gegenüberliegende Lauffläche für die Wälzkörper 81 wird durch einen Absatz der Aufnahme 80 gebildet. Dadurch, dass der Spannring 84 auf den Gewindezapfen 85 aufgeschraubt ist, kann das Nadellager 75 in Richtung der Längsmittelachse 16 der Rüttelstange 8 spielfrei eingestellt werden, insbesondere in Richtung der Längsmittelachse 16 vorgespannt werden. Dadurch ist sichergestellt, dass die Rüttelstange 8 in Richtung der Längsmittelachse 16 fest am Anschlussstück 34 gehalten ist und im Betrieb keine Relativbewegung zwischen diesen Bauteilen möglich ist, die zu einem Ausschlagen am Anschlussstück 34 führen könnte. Dadurch kann auf einfache Weise eine hohe Lebensdauer des Kurbeltriebs 50 erreicht werden.

## Patentansprüche

1. Tragbares, handgeführtes Erntegerät mit einem Antriebsmotor (4), der über einen Kurbeltrieb (50) eine Rüttelstange (8) antreibt, wobei der Kurbeltrieb (50) eine um eine Drehachse (39) angetriebene Kurbelwelle (29) umfasst, **dadurch gekennzeichnet, dass** das Erntegerät (1) zwei gegenläufig angetriebene Ausgleichsmassen aufweist, wobei eine erste Ausgleichsmasse mit der Kurbelwelle (29) verbunden ist und um die Drehachse (39) der Kurbelwelle (29) dreht, und wobei die Drehachse (39) der Kurbelwelle (29) einen Abstand (a) zur Längsmittelachse (16) der Rüttelstange (8) aufweist.

2. Erntegerät nach Anspruch 1,
**dadurch gekennzeichnet, dass** eine zweite Ausgleichsmasse um eine zweite Drehachse (40) dreht, und dass die erste Drehachse (39) und die zweite Drehachse (40) auf gegenüberliegenden Seiten der Längsmittelachse (16) der Rüttelstange (8) angeordnet sind, wobei die erste Drehachse (39) und die zweite Drehachse (40) insbesondere etwa den gleichen Abstand (a, b) zur Längsmittelachse (16) der Rüttelstange (8) aufweisen.

3. Erntegerät nach Anspruch 1 oder 2,
**dadurch gekennzeichnet, dass** der Kurbeltrieb (50) ein Pleuel (33) umfasst, das an einer ersten Schwenkachse (38) schwenkbar an der Kurbelwelle (29) gelagert ist, wobei die Schwenkachse (38) des Pleuels (33) bezogen auf die Drehachse (39) der Kurbelwelle (29) gegenüberliegend zum Massenschwerpunkt (51) der ersten Ausgleichsmasse angeordnet ist.

4. Erntegerät nach einem der Ansprüche 1 bis 3,
**dadurch gekennzeichnet, dass** die Bewegung der Ausgleichsmassen über zwei miteinander kämmende Stirnräder (22, 23) gekoppelt ist, wobei ein erstes Stirnrad (22) drehfest mit der Kurbelwelle (29) verbunden ist und ein zweites Stirnrad (23) drehfest mit der zweiten Ausgleichsmasse verbunden ist, wobei insbesondere der Antriebsmotor (4) die Kurbelwelle (29) über ein Getriebe (6) antreibt und wobei das Getriebe (6) vorteilhaft ein an einer Antriebswelle (5) festgelegtes Antriebsritzel (19) umfasst, das ein Kegelrad (20) antreibt.

5. Erntegerät nach Anspruch 4,
**dadurch gekennzeichnet, dass** das Kegelrad (20) drehfest mit einem Antriebsrad (21) verbunden ist, das ein mit einer Ausgleichsmasse verbundenes Stirnrad (22) antreibt, wobei das Antriebsrad (21) insbesondere das erste, mit der Kurbelwelle (29) verbundene Stirnrad (22) antreibt.

6. Erntegerät nach Anspruch 4 oder 5,
**dadurch gekennzeichnet, dass** das Getriebe (6) mit dem ersten Stirnrad (22) und dem zweiten Stirnrad (23) in einem mit Schmiermittel gefüllten Getriebegehäuse (18) angeordnet ist, und dass die Ausgleichsmassen außerhalb des Getriebegehäuses (18) angeordnet sind.

7. Erntegerät nach Anspruch 1,
**dadurch gekennzeichnet, dass** der Kurbeltrieb (50) ein Pleuel (33) umfasst, das an einer Schwenkachse (37) schwenkbar mit der Rüttelstange (8) verbunden ist, wobei die Schwenkachse (37) einen Abstand (c) zur Längsmittelachse (16) der Rüttelstange (8) aufweist, wobei der Abstand (c) der Schwenkachse (37) zur Längsmittelachse (16) der Rüttelstange (8) insbesondere kleiner als der Abstand (a) der Drehachse (39) der Kurbelwelle (29) zur Längsmittelachse (16) der Rüttelstange (8) ist und wobei der Abstand (c) der Schwenkachse (37) zur Längsmittelachse (16) der Rüttelstange (8) vorteilhaft etwa 20% bis etwa 90% des Abstands (a) der Drehachse (39) der Kurbelwelle (29) zur Längsmittelachse (16) der Rüttelstange (8) beträgt.

8. Erntegerät nach Anspruch 7,
**dadurch gekennzeichnet, dass** das Pleuel (33) über ein Anschlussstück (34) mit der Rüttelstange (8) verbunden ist, wobei die Rüttelstange (8) an dem Anschlussstück (34) um ihre Längsmittelachse (16) drehbar gehalten ist, wobei die Rüttelstange (8) vorteilhaft mit einem in Richtung der Längsmittelachse (16) der Rüttelstange (8) vorgespannten Lager, insbesondere einem Nadellager (75), an dem Anschlussstück (34) gelagert ist.

9. Erntegerät nach Anspruch 7 oder 8,
**dadurch gekennzeichnet**, das im Bereich der Schwenkachse (37) mindestens eine Führung für den Kurbeltrieb (50) vorgesehen ist.

10. Erntegerät nach einem der Ansprüche 7 bis 9,
**dadurch gekennzeichnet, dass** eine erste, mit dem Pleuel (33) verbundene Ausgleichsmasse zwei Ausgleichsgewichte (24, 25) umfasst, die beidseitig des Pleuels (33) angeordnet sind, und dass eine zweite Ausgleichsmasse ein Ausgleichsgewicht (26) umfasst, das in Richtung der Drehachse (40) dieses Ausgleichsgewichts (26) zwischen den beiden Ausgleichsgewichten (24, 25) der ersten Ausgleichsmasse angeordnet ist, wobei der Abstand (d) der Drehachsen (39, 40) der Ausgleichsmassen insbesondere weniger als etwa 120% der größten radialen Erstreckung (r) eines Ausgleichsgewichts (24, 25, 26) beträgt.

11. Erntegerät nach einem der Ansprüche 7 bis 10,
**dadurch gekennzeichnet, dass** der Antriebsmotor (4) eine Antriebswelle (5) antreibt, und dass die Schwenkachse (37) des Pleuels (33) an dem Anschlussstück (34) zu der Drehachse (11) der Antriebswelle (5) einen Abstand aufweist, der kleiner oder gleich dem Abstand (c) der Schwenkachse (37) zur Längsmittelachse (16) der Rüttelstange (8) ist.

12. Erntegerät nach einem der Ansprüche 1 bis 11,
**dadurch gekennzeichnet, dass** die Rüttelstange (8) an ihrem motorseitigen Ende (53) von einem Schutzrohr (7) umgeben ist, wobei die Rüttelstange (8) in dem Schutzrohr (7) mit mindestens einem Gleitlager (35) gelagert ist.

13. Erntegerät nach Anspruch 12,
**dadurch gekennzeichnet, dass** mindestens zwei Gleitlager (35) zur Lagerung der Rüttelstange (8) vorgesehen sind, wobei die Gleitlager (35) in einem Zwischenraum (45) zwischen dem Schutzrohr (7) der Rüttelstange (8) angeordnet sind, und wobei der Zwischenraum (45) von in Längsrichtung der Rüttelstange (8) außerhalb der Lager (35) angeordneten Dichtungen (43) begrenzt ist, wobei der Zwischenraum (45) mit Schmiermittel gefüllt ist.

## Claims

1. Portable hand-operated harvesting device with a drive motor (4) which powers a vibrating rod (8) by means of a crank drive (50), such that the crank drive (50) comprises a crankshaft (29) driven about a rotation axis (39),
**characterised in that** the harvesting device (1) comprises two balancing masses driven in opposite directions, such that a first balancing mass is connected to the crankshaft (29) and rotates about the rotation axis (39) of the crankshaft (29), and such that the rotation axis (39) of the crankshaft (29) is a distance (a) away from the central longitudinal axis (16) of the vibrating rod (8).

2. Harvesting device according to Claim 1,
**characterised in that** a second balancing mass rotates about a second rotation axis (40), and the first rotation axis (39) and the second rotation axis (40) are arranged on opposite sides of the central longitudinal axis (16) of the vibrating rod (8), the first rotation axis (39) and the second rotation axis (40) being in particular approximately the same distance (a, b) away from the central longitudinal axis (16) of the vibrating rod (8).

3. Harvesting device according to Claims 1 or 2,
**characterised in that** the crank drive (50) comprises a connecting rod (33) which is mounted on the crankshaft (29) so that it can pivot about a first pivot axis (38), in such manner that relative to the rotation axis (39) of the crankshaft (29) the pivot axis (38) of the connecting rod (33) is arranged opposite the centre of gravity (51) of the first balancing mass.

4. Harvesting device according to any of Claims 1 to 3,
**characterised in that** the movement of the balancing masses is coupled by means of two spur gears (22, 23) that mesh with one another, such that a first spur gear (22) is connected rotationally fixed to the crankshaft (29) and a second spur gear (23) is connected rotationally fixed to the second balancing mass, and in particular the drive motor (4) drives the crankshaft (29) via a transmission (6), the said transmission (6) advantageously comprising a drive pinion (19) attached to a driveshaft (5), which drives a bevel gear (20).

5. Harvesting device according to Claim 4,
**characterised in that** the bevel gear (20) is connected rotationally fixed to a drive , wheel (21) which drives a spur gear (22) connected to a balancing mass, the drive wheel (21) driving in particular the first spur gear (22), namely the one connected to the crankshaft (29).

6. Harvesting device according to Claims 4 or 5,
**characterised in that** the transmission (6) with the first spur gear (22) and the second spur gear (23) is arranged in a transmission housing (18) filled with lubricant, and the balancing masses are arranged outside the said transmission housing (18).

7. Harvesting device according to Claim 1,
**characterised in that** the crank drive (50) comprises a connecting rod (33) which is connected to the vibrating rod (8) so that it can pivot about a pivot axis (37), the pivot axis (37) being a distance (c) away from the central longitudinal axis (16) of the vibrating rod (8), such that the said distance (c) of the pivot axis (37) from the said central longitudinal axis (16) of the vibrating rod (8) is in particular smaller than the distance (a) of the rotation axis (39) of the crankshaft (29) from the central longitudinal axis (16) of the vibrating rod (8) and such that the distance (c) of the pivot axis (37) from the central longitudinal axis (16) of the vibrating rod (8) is advantageously approximately 20% to approximately 90% of the distance (a) of the rotation axis (39) of the crankshaft (29) from the central longitudinal axis (16) of the vibrating rod (8).

8. Harvesting device according to Claim 7,
**characterised in that** the connecting rod (33) is connected to the vibrating rod (8) by means of a connection piece (34), the vibrating rod (8) being held and able to rotate about its central longitudinal axis (16) on the said connection piece (34), and the vibrating rod (8) advantageously being mounted on the connection piece (34) by means of a bearing, in particular a needle bearing (75), which is prestressed in the direction of the central longitudinal axis (16) of the vibrating rod (8).

9. Harvesting device according to Claims 7 or 8,
**characterised in that** in the area of the pivot axis (37) at least one guide for the crank drive (50) is provided.

10. Harvesting device according to any of Claims 7 to 9,
**characterised in that** a first balancing mass connected to the connecting rod (33) comprises two balancing weights (24, 25) arranged on either side of the connecting rod (33), and a second balancing mass comprises a balancing weight (26) which is arranged in the direction of the rotation axis (40) of this balancing weight (26) between the two balancing weights (24, 25), such that the distance (d) of the rotation axes (39, 40) of the balancing masses is in particular smaller than approximately 120% of the largest radial extension (r) of any of the balancing weights (24, 25, 26).

11. Harvesting device according to any of Claims 7 to 10,
**characterised in that** the drive motor (4) powers a driveshaft (5) and the pivot axis (37) of the connecting rod (33) on the connecting piece (34) is a distance from the rotation axis (11) of the driveshaft (5) which is smaller than or equal to the distance (c) from the pivot axis (37) to the central longitudinal axis (16) of the vibrating rod (8).

12. Harvesting device according to any of Claims 1 to 11,
**characterised in that** at its end (53) near the motor the vibrating rod (8) is surrounded by a protective tube (7), the vibrating rod (8) being fitted in the protective tube (7) with at least one slide bearing (35).

13. Harvesting device according to Claim 12,
**characterised in that** at least two slide bearings (35) for mounting the vibrating rod (8) are provided, the slide bearings (35) being arranged in an intermediate space (45) between the protective tube (7) of the vibrating rod (8), and such that the said intermediate space (45) is delimited by seals (43) positioned outside the bearings (35) in the longitudinal direction of the vibrating rod (8), the intermediate space (45) being filled with lubricant.

## Revendications

1. Appareil de récolte portatif, tenu à la main, avec un moteur d'entraînement (4) qui entraîne une perche de secouage (8) par l'intermédiaire d'une commande à manivelle (50), la commande à manivelle (50) comprenant une manivelle (29) entraînée en rotation sur un axe de rotation (39),
**caractérisé en ce que** l'appareil de récolte (1) comporte deux masses d'équilibrage entraînées en sens inverse, une première masse d'équilibrage étant reliée à la manivelle (29) et tournant sur l'axe de rotation (39) de la manivelle (29), et l'axe de rotation (39) de la manivelle (29) présentant un écartement (a) par rapport à l'axe longitudinal médian (16) de la perche de secouage (8).

2. Appareil de récolte selon la revendication 1,
**caractérisé en ce qu'**une seconde masse d'équilibrage tourne sur un second axe de rotation (40), et **en ce que** le premier axe de rotation (39) et le second axe de rotation (40) sont disposés sur des côtés opposés de l'axe longitudinal médian (16) de la perche de secouage (8), le premier axe de rotation (39) et le second axe de rotation (40) présentant notamment à peu près le même écartement (a, b) par rapport à l'axe longitudinal médian (16) de la perche de secouage (8).

3. Appareil de récolte selon la revendication 1 ou 2,
**caractérisé en ce que** la commande à manivelle (50) comprend une bielle (33) qui est montée pivotante, au niveau d'un premier pivot (38), sur la manivelle (29), le pivot (38) de la bielle (33) étant disposé, par rapport à l'axe de rotation (39) de la manivelle (29), en face du centre de gravité (51) de la première masse d'équilibrage.

4. Appareil de récolte selon l'une des revendications 1 à 3,
**caractérisé en ce que** le mouvement des masses d'équilibrage est couplé par l'intermédiaire de deux pignons droits (22, 23) qui s'engrènent, étant précisé qu'un premier pignon droit (22) est relié, fixe en rotation, à la manivelle (29) tandis qu'un second pignon droit (23) est relié, fixe en rotation, à la seconde masse d'équilibrage, étant précisé notamment que le moteur d'entraînement (4) entraîne la manivelle (29) par l'intermédiaire d'une transmission (6), et étant précisé que la transmission (6) comprend avantageusement un pignon d'entraînement (19) qui est fixé à un arbre d'entraînement (5) et qui entraîne un pignon conique (20).

5. Appareil de récolte selon la revendication 4,
**caractérisé en ce que** le pignon conique (20) est relié, fixe en rotation, à une roue d'entraînement (21) qui entraîne un pignon droit (22) relié à une masse d'équilibrage, la roue d'entraînement (21) entraînant en particulier le premier pignon droit (22) relié à la manivelle (29).

6. Appareil de récolte selon la revendication 4 ou 5,
**caractérisé en ce que** la transmission (6) est disposée avec le premier pignon droit (22) et le second pignon droit (23) dans un carter de transmission (18) rempli de lubrifiant, et **en ce que** les masses d'équilibrage sont disposées à l'extérieur du carter de transmission (18).

7. Appareil de récolte selon la revendication 1,
**caractérisé en ce que** la commande à manivelle (50) comprend une bielle (33) qui est reliée pivotante, au niveau d'un pivot (37), à la perche de secouage (8), étant précisé que le pivot (37) présente un écartement (c) par rapport à l'axe longitudinal médian (16) de la perche de secouage (8), que l'écartement (c) entre le pivot (37) et l'axe longitudinal médian (16) de la perche de secouage (8) est notamment plus petit que l'écartement (a) entre l'axe de rotation (39) de la manivelle (29) et l'axe longitudinal médian (16) de la perche de secouage (8), et que l'écartement (c) entre le pivot (37) et l'axe longitudinal médian (16) de la perche de secouage (8) représente avantageusement environ 20% à environ 90% de l'écartement (a) entre l'axe de rotation (39) de la manivelle (29) et l'axe longitudinal médian (16) de la perche de secouage (8).

8. Appareil de récolte selon la revendication 7,
**caractérisé en ce que** la bielle (33) est reliée à la perche de secouage (8) par l'intermédiaire d'un raccord (34), étant précisé que la barre de secouage (8) est fixée au raccord (34) pour pouvoir tourner sur son axe longitudinal médian (16), et que la perche de secouage (8) est avantageusement montée sur le raccord (34) avec un palier, en particulier un palier à aiguilles (75), contraint dans le sens de l'axe longitudinal médian (16) de la perche de secouage (8).

9. Appareil de récolte selon la revendication 7 ou 8,
**caractérisé en ce qu'**il est prévu dans la zone du pivot (37) au moins un guide pour la commande à manivelle (50).

10. Appareil de récolte selon l'une des revendications 7 à 9,
**caractérisé en ce qu'**une première masse d'équilibrage reliée à la bielle (33) comprend deux poids d'équilibrage (24, 25) qui sont disposés des deux côtés de la bielle (33), et **en ce qu'**une seconde masse d'équilibrage comprend un poids d'équilibrage (26) qui est disposé dans le sens de l'axe de rotation (40) de ce poids d'équilibrage (26) entre les deux poids d'équilibrage (24, 25) de la première masse d'équilibrage, étant précisé que l'écartement (d) des axes de rotation (39, 40) des masses d'équilibrage représente notamment moins de 120%, environ, de l'extension radiale maximale (r) d'un poids d'équilibrage (24, 25, 26).

11. Appareil de récolte selon l'une des revendications 7 à 10,
**caractérisé en ce que** le moteur d'entraînement (4) entraîne un arbre d'entraînement (5) et **en ce que** le pivot (37) de la bielle (33) sur le raccord (34) présente par rapport à l'axe de rotation (11) de l'arbre d'entraînement (5) un écartement qui est inférieur ou égal à l'écartement (c) entre le pivot (37) et l'axe longitudinal médian (16) de la perche de secouage (8).

12. Appareil de récolte selon l'une des revendications 1 à 11,
**caractérisé en ce que** la perche de secouage (8) est entourée par un tube de protection (7), à son extrémité côté moteur (53), la perche de secouage (8) étant montée dans le tube de protection (7) avec au moins un palier lisse (35).

13. Appareil de récolte selon la revendication 12,
**caractérisé en ce qu'**il est prévu au moins deux paliers lisses (35) pour le montage de la perche de secouage (8), étant précisé que les paliers lisses (35) sont disposés dans un espace intermédiaire (45) entre le tube de protection (7) et la perche de secouage (8), que l'espace intermédiaire (45) est délimité par des joints d'étanchéité (43) disposés à l'extérieur des paliers (35), dans le sens longitudinal de la perche (8), et que ledit espace intermédiaire (45) est rempli de lubrifiant.
